# EUROPÄISCHE PATENTSCHRIFT

(11) **EP 3 019 356 B1**
(45) Veröffentlichungstag und Bekanntmachung des Hinweises auf die Patenterteilung: **27.09.2017**
(21) Anmeldenummer: 14729645.3
(22) Anmeldetag: 10.06.2014
(51) Int. Cl.: B60G 3/28, B60G 11/08, F16F 1/18

(54) **RADAUFHÄNGUNG FÜR EIN KRAFTFAHRZEUG MIT GEKRÜMMTER QUERBLATTFEDER**
SUSPENSION FOR A MOTOR VEHICLE WITH CURVED TRANSVERSE LEAF SPRING
SUSPENSION POUR UN VEHICULE AVEC UN RESSORT À LAME TRANSVERSALE COURBÉ

(30) Priorität: 12.07.2013 DE 102013213674
(43) Veröffentlichungstag der Anmeldung: 18.05.2016
(73) Patentinhaber: ZF Friedrichshafen AG, 88046 Friedrichshafen (DE)
(72) Erfinder: HACKER, Clemens, 49080 Osnabrück (DE); ALBERS, Ingo, 71665 Vaihingen (DE); HOFMANN, Peter, 82131 Gauting (DE); RUPFLIN, Thomas, 88719 Stetten (DE); SIDDIQUI, Sami Uddin, 49448 Lemförde (DE)
(86) Internationale Anmeldenummer: PCT/EP2014/061955
(87) Internationale Veröffentlichungsnummer: WO 2015/003863

(56) Entgegenhaltungen:
- EP-A1- 0 243 102
- EP-A1- 1 378 382
- EP-A1- 1 645 445
- EP-A2- 0 337 741
- EP-A2- 0 916 525
- WO-A1-2011/124814
- DE-A1-102008 054 669
- DE-T2- 69 002 316
- FR-A1- 2 950 570
- GB-A- 2 211 913
- JP-A- S6 341 211
- US-A- 1 975 836
- US-A1- 2002 000 703

## Beschreibung

Die vorliegende Erfindung betrifft eine Radaufhängung für ein Kraftfahrzeug gemäß der im Oberbegriff des Patentanspruchs 1 näher definierten Art. Ein Beispiel einer solchen Radaufhängung ist aus der EP 1 378 382 A1 bekannt. Aus der EP 1 645 445 A1 ist eine Radaufhängung für ein Kraftfahrzeug bekannt, die eine quer zum Kraftfahrzeug angeordnete Blattfeder aufweist, welche einen Mittelbereich und zwei einander gegenüberliegende Endbereiche aufweist. Die Endbereiche sind jeweils in einem Blattfederlager aufgenommen, die jeweils mit einem Fahrzeugaufbau verbunden sind. Die Blattfeder ist an mindestens einem Radträger angelenkt. Der Mittelbereich der Blattfeder weist einen leicht nach unten gewölbten Verlauf bis zu den Endbereichen auf. Von den Endbereichen zu den freien Enden hin ist die Blattfeder im Wesentlichen gerade ausgestaltet. Die Blattfeder ist vor der Radmitte angeordnet und somit bzgl. des Bauraums ungünstig, da bspw. eine Antriebswelle sich vom Frontmotor bis zur Hinterachse und somit ebenfalls vor die Radmitte erstreckt.

Somit ist es eine Aufgabe der Erfindung eine Radaufhängung hinsichtlich des Bauraums zu verbessern.

Die der Erfindung zugrundeliegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Radaufhängung für ein Kraftfahrzeug, insbesondere für eine antreibbare Hinterachse eines solchen Kraftfahrzeugs, vorgeschlagen, wobei die Radaufhängung zwei in Fahrzeugquerrichtung gegenüberliegend angeordnete Radträger sowie eine sich zwischen diesen beiden Radträgern erstreckende Querblattfeder umfasst. Die beiden Radträger sind jeweils über zumindest einen radführenden Lenker mit dem dafür vorgesehenen Aufbau des Kraftfahrzeugs gelenkig verbindbar. Die Verbindung zwischen der Radaufhängung und dem Aufbau kann unmittelbar ohne Zwischenschaltung zusätzlicher Bauteile erfolgen. Alternativ kann der Lenker aber auch gelenkig an einem Hilfsrahmen montiert sein, der wiederum mit dem Aufbau verbindbar ist.

Die im Folgenden verwendeten Begrifflichkeiten Draufsicht, Vorderansicht sowie Rückansicht entsprechen der Orientierung der Radaufhängung im Fahrzeug eingebauten Zustand. Bei der Draufsicht ist die Blickrichtung in Richtung der Hochachse von oben auf das Fahrzeug während bei der Vorderansicht das Fahrzeug entgegen der Fahrtrichtung von vorne nach hinten in Richtung der Längsachse betrachtet wird. Bei der Rückansicht schließlich ist die Blickrichtung vom Fahrzeugheck aus in Fahrtrichtung. Ferner ist unter dem Begriff "Nulllage" diejenige Lage der Querblattfeder zu verstehen, die diese im eingebauten Zustand unter der vom Kraftfahrzeug ausgeübten Gewichtslast einnimmt.

Zum Ein- und Ausfedern der Radträger gegenüber dem Aufbau aus einer Nulllage ist die Blattfeder zum einen im Bereich zwischen ihren beiden Enden von diesen beabstandet mit dem dafür vorgesehenen Aufbau unmittelbar oder mittelbar über den Hilfsrahmen verbindbar. Zum anderen ist die Querblattfeder im Bereich ihrer beiden Enden mit dem jeweils zugeordneten Radträger verbunden. Zum Ausgleich von Bodenunebenheiten sowie von Wank- und Nickbewegungen des Fahrzeugs kann die Querblattfeder aus ihrer Nulllage ein- und ausfedern, so dass diese die Wirkung einer Hub- und Wankfederung übernimmt. Unter der Nickbewegung ist eine Bewegung des Fahrzeugs um die Querachse zu verstehen. Wanken ist eine Bewegung um die Längsachse. Ein Radträger beschreibt beim Ein- und Ausfedern eine Hubbewegung.

Die Querblattfeder weist bei Nulllage zumindest in einem ihrer Abschnitte eine Krümmung auf. Die Krümmung ist derart ausgebildet, dass die Querblattfeder bei Draufsicht, insbesondere von ihrer Mitte ausgehend, in oder entgegen der Fahrtrichtung gekrümmt ist. Hierdurch kann im Bereich der Radmitte ausreichend Bauraum für zusätzliche Komponenten geschaffen werden. Dies ist insbesondere dann förderlich, wenn das Fahrzeug eine antreibbare Hinterachse aufweist, da hierdurch problemlos Antriebsaggregate, Wellen und/oder Getriebe im Bereich der Radmitte angeordnet werden können. Vorteilhafterweise können somit auch Kardanwellen mit einer gegenüber den Radträgern geringen Winkelstellung angeordnet werden, wodurch sich der Wirkungsgrad der Kraftübertragung verbessert. Des Weiteren können aufgrund der Blattfeder ein Stabilisator sowie die Aufbaufedern entfallen, so dass die Radaufhängung konstruktiv einfacher, leichter und in der Herstellung günstiger ausgebildet werden kann.

Vorteilhaft ist es, wenn die Querblattfeder mit ihrer ersten Krümmung um die Fahrzeughochachse gekrümmt ist, so dass die beiden Enden der Querblattfeder von der Querblattfedermitte ausgehend aus einer zur Fahrzeugquerachse parallelen Lage in oder entgegen der Fahrtrichtung gebogen sind. Hierdurch kann gemäß den oben genannten Vorteilen genügend Bauraum für entsprechende Komponenten zum Antreiben der Hinterachse im Bereich der Radmitte geschaffen werden.

Die Querblattfeder weist eine zweite Krümmung auf. Diese ist derart ausgebildet, dass die Querblattfeder bei Vorderansicht oder Rückansicht, insbesondere von ihrer Mitte ausgehend, zur Fahrbahn hin oder von dieser weg gekrümmt ist. Hierdurch kann vorteilhafterweise das Wankzentrum und der Einfluss der Querblattfeder auf den Spurverlauf gezielt eingestellt werden. So ist es, insbesondere bei einer hinter der Radmitte angeordneten Querblattfeder, vorteilhaft, wenn mit der zweiten Krümmung die Querblattfederenden zur Fahrbahn hin ausgebildet sind, da das dafür vorgesehene Rad beim Einfedern in Vorspur geht, so dass eine Stabilisierung des Fahrzeugs erreicht werden kann.

Vorteilhaft ist es, wenn die zweite Krümmung als Krümmung um die Fahrzeuglängsachse ausgebildet ist, so dass die beiden Enden der Querblattfeder von der Querblattfedermitte ausgehend aus einer zur Fahrzeugquerachse parallelen Lage zur Fahrbahn hin oder von dieser weg gebogen sind. Hierdurch kann gemäß den oben genannten Ausführungen eine Federung der Radaufhängung sowie eine Einstellung des Sturz- und/oder Vorspurverhaltens erreicht werden.

Vorteilhaft ist es, wenn die Querblattfeder mit dem dafür vorgesehenen Aufbau über ein erstes und ein zweites Lager verbindbar ist. Hierdurch kann eine Hub- und Wankfederung realisiert werden. Vorteilhafterweise können somit mittels der Querblattfeder ein zusätzlicher Stabilisator und eine entsprechende Aufbaufederung entfallen, wodurch die Kosten und der konstruktive Aufwand der Radaufhängung reduziert werden können. Vorzugsweise sind die beiden Lager in einem am Aufbau montierbaren Hilfsrahmen angeordnet. Hierdurch kann die Montage der Radaufhängung am Aufbau, insbesondere als Radaufhängungsmodul erleichtert werden. Auch ist es vorteilhaft, wenn die beiden Lager als Gummilager ausgebildet, zueinander beabstandet und/oder zur Fahrzeuglängsachse symmetrisch angeordnet sind.

Um den Herstellungsaufwand der Querblattfeder möglichst gering zu halten, ist es vorteilhaft, wenn sich die erste und/oder zweite Krümmung im Wesentlichen gleichmäßig zumindest im Bereich zwischen den beiden Lagern erstreckt.

Die erste und zweite Krümmung erstrecken sich über die gesamte Länge der Querblattfeder, insbesondere gleichmäßig.

In einer vorteilhaften Weiterbildung der Erfindung ist die Querblattfeder ein, insbesondere mit Kohle-, Glas- und/oder Aramidfasern, verstärktes Faserverbundbauteil. Hierdurch kann das Gewicht der Radaufhängung günstig reduziert werden.

Auch ist es vorteilhaft, wenn die Querblattfeder im Querschnitt im Wesentlichen rechteckig ausgebildet ist und/oder einen annähernd kreisförmigen oder ellipsenartigen Querschnitt aufweist. Es ist des Weiteren vorteilhaft, wenn die Querblattfeder über ihre Länge eine von kreisförmig zu rechteckig variierende, insbesondere endseitig von kreisförmig zu ihrer Mitte rechteckig sich erstreckende Querschnittsform aufweist.

Die Querblattfeder kann eine über ihre Länge variierende und/oder abschnittsweise unterschiedlich große Querschnittsfläche aufweisen. Die Querblattfeder kann somit je nach Steifigkeitsanforderungen derart ausgebildet werden, dass sie eine optimale Hub- und/oder Wankfederung, bei gleichzeitiger Querführung der dafür vorgesehenen Räder sicherstellt.

Insbesondere bei einer aus einem faserverstärkten Faserverbundwerkstoff ausgebildeten Querblattfeder ist es vorteilhaft, wenn die nach Abschluss des Herstellungsprozesses ausgebildete Grundform der Querblattfeder bereits zumindest teilweise die erste und/oder zweite Krümmung aufweist. So kann die Querblattfeder zum Beispiel im ausgebauten Zustand, d. h. in ihrer Grundform, bereits eine die erste und/oder zweite Krümmung teilweise ausbildende Form aufweisen, die erst beim Einbau in die Radaufhängung bis zur endgültigen ersten und/oder zweiten Krümmung ausgeformt, insbesondere gebogen, wird. Hierdurch kann vorteilhafterweise die Flexibilität der Querblattfeder in mehreren Ebenen unterschiedlich ausgebildet sein. Vorzugsweise sind die Biegeeigenschaften der Querblattfeder in der Ebene der ersten Krümmung härter ausgebildet als in der Ebene der zweiten Krümmung. Die Grundform der Querblattfeder kann aber auch alternativ bereits die erste Krümmung vollständig ausgebildet aufweisen. Infolgedessen würde nur die zweite Krümmung beim Einbauen in die Radaufhängung durch Biegung ausgebildet werden, so dass die Einbauform der Querblattfeder beide Krümmungen aufweist. Von diesen wäre jedoch lediglich die zweite Krümmung federbeaufschlagt ausgebildet. Die Begrifflichkeit Einbauform definiert hierbei die Form der Querblattfeder, die diese unter der vom Fahrzeug ausgeübten Last in ihrer Nulllage einnimmt.

Um eine Federung des Fahrzeugs unter den gewünschten Radführungseigenschaften sicherstellen zu können, ist es vorteilhaft, wenn die Querblattfeder zur Ausbildung der ersten und/oder zweiten Krümmung, insbesondere flexibel, aus der Grundform in die Einbauform gebogen ist.

Um eine gleichmäßige Krümmung, insbesondere Biegung, der Querblattfeder im mittleren Bereich und/oder in ihren äußeren Bereichen erreichen zu können, ist es vorteilhaft, wenn die beiden Lager bei Draufsicht auf die Radaufhängung zur Längsachse der Querblattfeder und/oder bei Vorderansicht bzw. Rückansicht auf die Radaufhängung zur Querachse der Querblattfeder orthogonal ausgerichtet sind. Hierdurch wird die Torsionsbelastung der Querblattfeder über ihre gesamte Länge gleichmäßig verteilt, so dass eine konstruktiv einfache Ausgestaltung der Querblattfeder ermöglicht wird, wodurch wiederum die Herstellungskosten der Querblattfeder reduziert werden können. Die beiden Lager sind somit derart ausgebildet, dass diese die Querblattfeder mit ihrer flexibel ausgebildeten ersten und/oder zweiten Krümmung in ihrer Einbauform halten.

Um die Querblattfeder in ihrer Lage und Form zu halten, ist es vorteilhaft, wenn die beiden Lager in der Draufsicht zur Ausbildung der ersten Krümmung gegenüber der Fahrzeuglängsachse und/oder in der Vorderansicht bzw. Rückansicht zur Ausbildung der zweiten Krümmung gegenüber der Fahrzeughochachse schräg gestellt sind. Ferner wird hierdurch eine gleichmäßige erste und/oder zweite Krümmung, insbesondere flexible Biegung, der Querblattfeder ausgebildet.

Insbesondere bei einer antreibbaren Hinterachse ist es vorteilhaft, wenn die beiden Lager und/oder die beiden Enden der Querblattfeder in oder hinter der Radmitte angeordnet sind. Somit kann nämlich für die Antriebskomponenten, insbesondere ein Antriebsaggregat, ein Getriebe und/oder zumindest eine Welle, ein ausreichend großer Bauraum ausgebildet werden.

Die Querblattfeder ist radführend ausgebildet. Hierfür ist sie radseitig mit dem jeweiligen Radträger gelenkig verbunden. Zusätzlich ist es vorteilhaft, wenn die Querblattfeder aufbauseitig mit der Karosserie gelenkig verbunden ist. Die Querblattfeder kann somit, insbesondere in Fahrzeugquerrichtung und/oder -längsrichtung, auftretende Kräfte aufnehmen bzw. abstützen. Auch kann die Querblattfeder zum Abstützen von Antriebs- und Bremsmomenten torsionssteif ausgebildet sein. Die Querblattfeder übernimmt im Wesentlichen die Funktion eines Querlenkers. Vorteilhafterweise kann die Radaufhängung somit sehr einfach und kostengünstig realisiert werden.

Vorteilhaft ist es, wenn die Querblattfeder zusätzlich oder alternativ im Bereich ihrer beiden Enden gelenkig und/oder unmittelbar mit dem jeweiligen Radträger verbunden ist. Hierdurch übernimmt die Querblattfeder nicht nur die Federung der Radaufhängung, sondern zusätzlich auch zumindest teilweise die Radführung. Infolgedessen wird der konstruktive Aufwand der Radaufhängung stark reduziert. Diesbezüglich ist es ferner vorteilhaft, wenn die gelenkige Verbindung zwischen dem Ende der Querblattfeder und dem jeweils zugeordneten Radträger mittels eines Drehgelenks, z.B. eines Kugelgelenks erfolgt.

Vorteilhaft ist es, wenn den beiden Radträger der Radaufhängung jeweils ein Längslenker zugeordnet ist. Der Längslenker ist derart ausgebildet und/oder gelagert, dass er vorzugsweise Spur- und Sturzänderungen zulässt. Der Längslenker nimmt hauptsächlich die Längs-, Brems- und Anfahrkräfte auf. Vorteilhafterweise ist der Längslenker starr mit dem jeweiligen Radträger, insbesondere einteilig, verbunden. Hierdurch bilden der Längslenker und der Radträger einen Schwertlenker aus.

Auch ist es vorteilhaft, wenn die Querblattfeder und/oder der Längslenker in Fahrzeughochrichtung in einer unteren Lenkerebene angeordnet sind. Hierdurch kann insbesondere im Falle einer Hinterachsen-Anwendung der Laderaum des Fahrzeugs vergrößert werden.

Zum Abstützen von Querkräften sowie zur Sturz- und Vorspureinstellung beim Einfedern der Radaufhängung ist es vorteilhaft, wenn diese einen radseitig mit dem Radträger gelenkig verbundenen Querlenker aufweist, der vor der Radmitte und/oder mit der Querblattfeder in derselben Lenkerebene angeordnet ist. Zusätzlich oder alternativ ist es ferner vorteilhaft, wenn dieser Querlenker kürzer ausgebildet ist als der zwischen dem jeweiligen Lager und dem diesem zugeordneten Ende der Querblattfeder ausgebildete Bereich der Querblattfeder. Hierdurch bewirkt der vordere kürzere Querlenker, dass das Rad durch die Flexibilität des Längslenkers beim Einfedern in Vorspur ziehen kann.

Auch ist es vorteilhaft, wenn die Radaufhängung einen zweiten Querlenker aufweist, der oberhalb der Radmitte bzw. in einer oberen Lenkerebene angeordnet ist.

Nachfolgend ist die Erfindung anhand von Zeichnungen näher erläutert. Es zeigen:
- Figur 1: eine Draufsicht auf eine Radaufhängung in der Nulllage und
- Figur 2: eine Rückansicht dieser Radaufhängung.

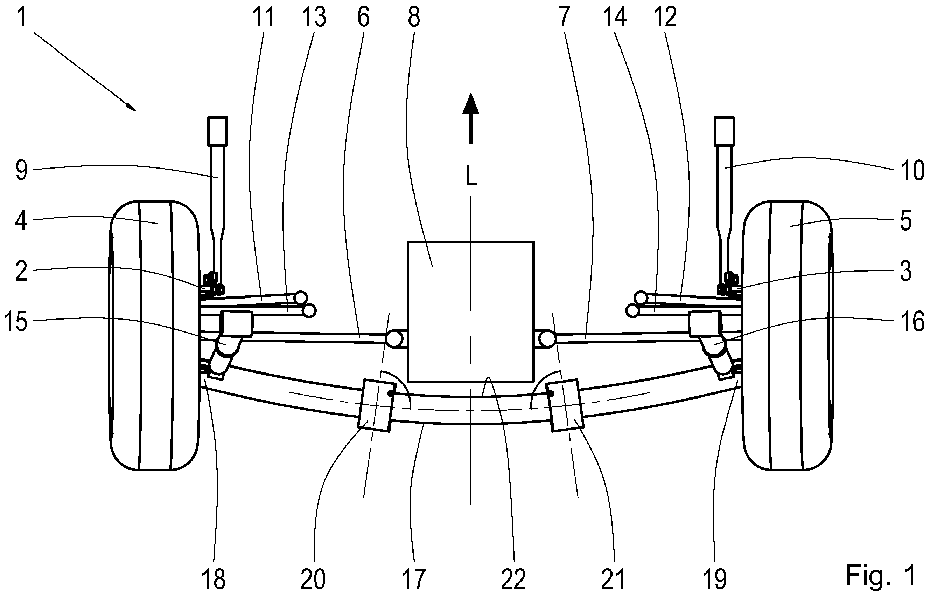

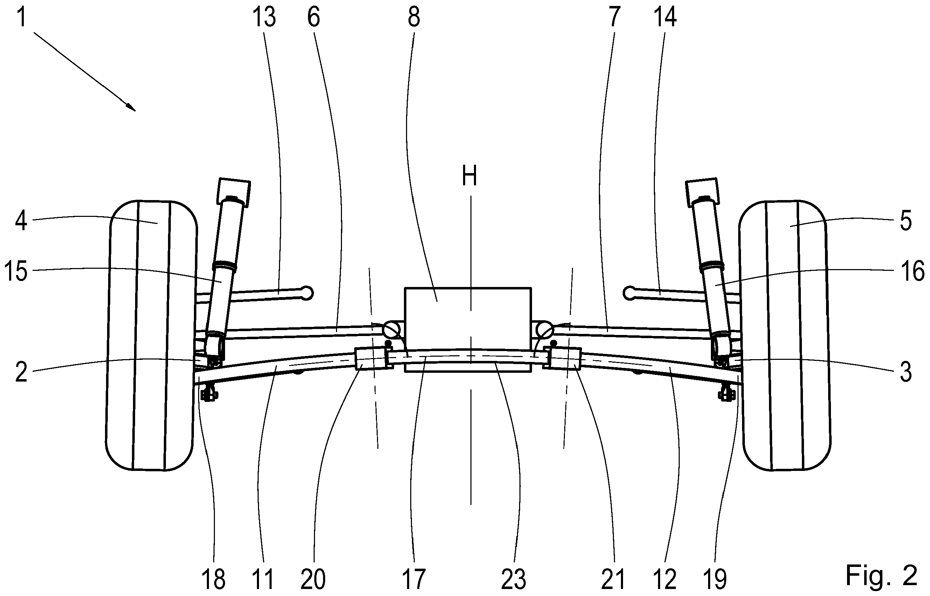

Die Figuren 1 und 2 zeigen eine Radaufhängung 1 für ein Kraftfahrzeug, die im vorliegenden Ausführungsbeispiel für eine antreibbare Hinterachse des Kraftfahrzeugs ausgebildet ist. Die Radaufhängung 1 umfasst zwei in Fahrzeugquerrichtung gegenüberliegend angeordnete Radträger 2, 3. Die beiden Radträger 2, 3 nehmen jeweils ein Rad 4, 5 drehbar gelagert auf. Im Bereich der Radmitte ist jedes der beiden Räder 4,5 mit einer Antriebswelle 6, 7 verbunden. An ihrem dem jeweiligen Radträger 2, 3 abgewandten Ende sind die beiden Antriebswellen 6, 7 mit einem Getriebe 8, insbesondere einem Differenzialgetriebe, gekoppelt. Von einem hier nicht dargestellten Antriebsaggregat können die beiden Räder 4, 5 somit über das Getriebe 8 und die jeweilige Antriebswelle 6, 7 angetrieben werden. Um im Bereich der Radmitte für die vorstehend genannten Komponenten zum Antreiben der Hinterachse genügend Bauraum zur Verfügung stellen zu können, ist die Radaufhängung 1 derart ausgebildet, dass Ihre radführenden Mittel von der Radmitte beabstandet angeordnet sind.

Die Radaufhängung 1 umfasst zwei, jeweils einem der beiden Radträger 2, 3 zugeordnete Längslenker 9, 10, die jeweils im Bereich ihres dem jeweils zugeordneten Radträger 2, 3 abgewandten Endes mit dem hier nicht dargestellten Aufbau des Kraftfahrzeugs gelenkig verbunden bzw. verbindbar sind. Die beiden Längslenker 9, 10 sind im Bereich ihres dem jeweiligen Radträger 2, 3 zugewandten Endes mit diesem starr verbunden. Vorzugsweise sind die Längslenker 9, 10 mit dem jeweiligen Radträger 2, 3 verschraubt und somit starr verbunden. Jeder der Längslenker 9, 10 bildet somit mit seinem jeweiligen Radträger 2, 3 einen Schwertlenker aus. In der in Figur 2 dargestellten Rückansicht der Radaufhängung ist ersichtlich, dass die beiden Längslenker 9, 10 in Bezug auf die Fahrzeughochachse H in einer unteren Lenkerebene angeordnet sind.

Die Radaufhängung 1 weist ferner einen dem jeweiligen Radträger 2, 3 zugeordneten unteren Querlenker 11, 12 sowie oberen Querlenker 13, 14 auf. Der in einer oberen Lenkerebene angeordnete obere Querlenker 13, 14 ist im Vergleich zu dem in der unteren Lenkerebene angeordneten unteren Querlenker 11, 12 länger ausgebildet. Zum Dämpfen von Schwingungen weist die Radaufhängung 1 ferner einen dem jeweiligen Radträger 2,3 zugeordneten Dämpfer 15, 16 auf, der mit dem jeweiligen Radträger 2, 3 hinter der Radmitte verbunden ist. Die beiden Dämpfer 15, 16 sind vorliegend derart gelenkig mit dem jeweiligen Radträger 2, 3 verbunden, dass diese keine Radführungsaufgaben übernehmen.

Wie in Figur 1 und 2 dargestellt, umfasst die Radaufhängung 1 eine Querblattfeder 17, die sich in Fahrzeugquerrichtung zwischen den beiden Radträgern 2, 3 erstreckt. Die gemäß Figur 1 dargestellte Draufsicht und die gemäß Figur 2 dargestellte Rückansicht der Radaufhängung zeigen die Querblattfeder in ihrer Nulllage, in die sie durch die Gewichtskraft des Fahrzeugs gedrückt ist.

Die Querblattfeder 17 ist im Bereich zwischen ihren beiden Enden 18, 19 mit dem hier nicht dargestellten Aufbau des Kraftfahrzeugs in einem ersten und zweiten Lager 20, 21 gelenkig verbunden. Die beiden Lager 20, 21 sind voneinander und von dem jeweils zugeordneten Ende 18, 19 der Querblattfeder 17 beabstandet. Die Enden 18, 19 der Querblattfeder 17 können somit um den hier nicht dargestellten Aufbau um das jeweils zugeordnete Lager 20, 21 schwenken. Die Querblattfeder 17 wirkt somit als Hub- und Wankfederung. Wie in Figur 1 und 2 ersichtlich, sind die beiden Lager 20, 21 ferner bei Draufsicht zur Längsachse der gekrümmten Querblattfeder 17 und bei Rückansicht zur Querachse der Querblattfeder 17 orthogonal ausgerichtet.

Die Querblattfeder 17 ist im Bereich ihrer beiden Enden 18, 19 mit dem jeweils zugeordneten Radträger 2, 3 verbunden. Ferner ist die Querblattfeder 17 radführend ausgebildet, wobei sie im vorliegenden Ausführungsbeispiel gelenkig im Bereich ihrer beiden Enden 18, 19 mit dem jeweils zugeordneten Radträger 2, 3 verbunden ist. Gemäß Figur 1 ist die Querblattfeder 17 in der Draufsicht hinter der Radmitte angeordnet. Gleiches trifft auf die Dämpfer 15, 16 zu. Das mit dem jeweiligen Radträger 2, 3 verbundene Ende der Dämpfer 15, 16 ist ferner über der Querblattfeder 17 im Bereich der jeweiligen Enden 18, 19 angeordnet.

Um für das Getriebe 8 sowie die beiden Antriebswellen 6, 7 den benötigten Bauraum zur Verfügung stellen zu können, weist die Querblattfeder 17 gemäß Figur 1 eine erste Krümmung 22 auf. Diese erste Krümmung 22 ist derart ausgebildet, dass die Querblattfeder 17 gemäß der in Figur 1 dargestellten Draufsicht von ihrer Mitte ausgehend in Fahrtrichtung gekrümmt ist. Die Fahrtrichtung ist in Figur 1 mit einem Pfeil gekennzeichnet. Die Querblattfeder 17 ist somit derart um die Fahrzeughochachse H gebogen, dass Ihre beiden Enden 18, 19 von der Querblattfedermitte ausgehend in die mit dem Pfeil gekennzeichnete Fahrtrichtung gebogen sind. Die erste Krümmung 22 erstreckt sich gleichmäßig über die gesamte Länge der Querblattfeder 17.

Zur Ausbildung dieser ersten Krümmung 22 sind die beiden Lager 20, 21 zur Fahrzeuglängsachse L schräggestellt. Gemäß Figur 1 ist diese Schrägstellung der beiden Lager 20, 21 gegenüber der Fahrzeuglängsachse L bzw. zueinander derart ausgebildet, dass sich die beiden Querachsen der Lager 20, 21 vor der Radmitte und/oder auf der Fahrzeuglängsachse L schneiden. Ihr Schnittpunkt bildet den Krümmungsmittelpunkt der ersten Krümmung 22.

Die Querblattfeder 17 weist ferner eine in Figur 2 ersichtliche zweite Krümmung 23 auf. Die zweite Krümmung 23 ist derart ausgebildet, dass die Querblattfeder 17 in der in Figur 2 dargestellten Rückansicht zur Fahrbahn hin gekrümmt ist. Zur Ausbildung dieser zweiten Krümmung 23 sind die Enden 18, 19 der Querblattfeder 17 somit im Wesentlichen um die Fahrzeuglängsachse L nach unten gebogen.

Die in Figur 1 und 2 dargestellte Querblattfederform weist die Querblattfeder 17 in ihrer Nulllage auf, d. h. im Kraftfahrzeug eingebauten Zustand, wobei die Querblattfeder 17 durch die Gewichtskraft des hier nicht dargestellten Aufbaus des Kraftfahrzeugs belastet ist. Beim Einfedern der Räder 4, 5 bewegen sich die Enden 18, 19 nach oben, so dass die Querblattfeder 17 in der Rückansicht eine im Wesentlichen geradlinige Form einnimmt. Hierbei vergrößert sich der Abstand zwischen dem Lager 20, 21 und seinem jeweils zugeordneten Radträger 2, 3. Da die Querblattfeder 17 hinter der Radmitte angeordnet ist und die unteren Querlenker 11, 12 kürzer als diese Endbereiche ausgebildet sind, geht das Rad 4, 5 in Vorspur. Hierdurch wird eine Stabilisierung des Kraftfahrzeugs erreicht.

Die in Figur 1 und 2 dargestellte Einbauform der Querblattfeder 17, die sich wie vorstehend ausgeführt im Wesentlichen aus der ersten und zweiten Krümmung 22, 23 zusammensetzt, kann diese durch Biegung erhalten. So kann die Querblattfeder 17 eine im Wesentlichen geradlinige Grundform in Bezug auf die erste Krümmung aufweisen und erst beim Einbau in die Radaufhängung bzw. ins Kraftfahrzeug in die entsprechende Einbauform gebogen werden. Gehalten wird die Querblattfeder 17 in ihrer derart federbeaufschlagten Einbauform mittels der beiden Lager 20, 21 sowie den im Bereich ihrer Enden 18, 19 mit dem jeweiligen Radträger 2, 3 ausgebildeten Gelenkverbindungen.

Alternativ kann jedoch zumindest eine dieser beiden Krümmungen 22, 23 bereits bei der Herstellung der Querblattfeder 17 ausgebildet worden sein. So ist es insbesondere bei einer aus einem Faserverbundwerkstoff ausgebildeten Querblattfeder 17 vorteilhaft, wenn die erste Krümmung 22 in der Grundform bereits vollständig oder zumindest teilweise ausgebildet ist. Demnach wäre die erste Krümmung 22 nicht federbeaufschlagt ausgebildet. Die zweite Krümmung 23 könnte hingegen durch entsprechende Biegung der Querblattfeder 17 ausgebildet sein, wobei diese in ihrer Nulllage durch die entsprechende Vier-Punkt-Lagerung gehalten wird.

Die vorliegende Erfindung ist nicht auf das dargestellte und beschriebene Ausführungsbeispiel beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

- 1.: Radaufhängung
- 2.: erster Radträger
- 3.: zweiter Radträger
- 4.: erstes Rad
- 5.: zweites Rad
- 6.: erste Antriebswelle
- 7.: zweite Antriebswelle
- 8.: Getriebe
- 9.: erster Längslenker
- 10.: zweiter Längslenker
- 11.: erster unterer Querlenker
- 12.: zweiter unterer Querlenker
- 13.: erster oberer Querlenker
- 14.: zweiter oberer Querlenker
- 15.: erster Dämpfer
- 16.: zweiter Dämpfer
- 17.: Querblattfeder
- 18.: erstes Ende
- 19.: zweites Ende
- 20.: erstes Lager
- 21.: zweites Lager
- 22.: erste Krümmung
- 23.: zweite Krümmung

- H: Fahrzeughochachse
- L: Fahrzeuglängsachse

## Patentansprüche

1. Radaufhängung (1) für eine antreibbare Hinterachse eines Kraftfahrzeugs mit zwei in Fahrzeugquerrichtung gegenüberliegend angeordneten Radträgern (2; 3), die jeweils über zumindest einen radführenden Lenker (9; 10) mit einem dafür vorgesehenen Aufbau gelenkig verbindbar sind, wobei die Radaufhängung (1) einen jeweils einem der beiden Radträger (2; 3) zugeordneten Längslenker (9; 10) aufweist, und mit einer sich zwischen diesen beiden Radträgern (2; 3) erstreckenden Querblattfeder (17), die zum Ein- und Ausfedern der Radträger (2; 3) aus einer Nulllage zum einen im Bereich zwischen ihren beiden Enden (18; 19) von diesen beabstandet mit dem dafür vorgesehenen Aufbau verbindbar und zum anderen im Bereich ihrer beiden Enden (18; 19) mit dem jeweils zugeordneten Radträger (2; 3) verbunden ist,
wobei die Querblattfeder (17) in ihrer Nulllage bei Draufsicht eine erste Krümmung und bei Vorderansicht eine zweite Krümmung (23) aufweist, die derart ausgebildet ist, dass die Querblattfeder (17) bei Vorderansicht von ihrer Mitte ausgehend zur Fahrbahn hin oder von dieser weg gekrümmt ist, wobei die erste Krümmung (22) derart ausgebildet ist, dass die Querblattfeder (17) von ihrer Mitte ausgehend in oder entgegen die Fahrtrichtung gekrümmt ist, **dadurch gekennzeichnet, dass** sich die erste (22) und zweite Krümmung (23) über die gesamte Länge der Querblattfeder (17) erstrecken und
dass die Querblattfeder (17) im Bereich ihrer beiden Enden (18; 19) gelenkig mit dem jeweiligen Radträger (2; 3) verbunden ist und zum Einstellen des Sturz- und/oder Vorspurverhaltens der Radaufhängung radführend ausgebildet ist.

2. Radaufhängung nach dem vorherigen Anspruch, **dadurch gekennzeichnet,**
**dass** die Querblattfeder (17) mit dem dafür vorgesehenen Aufbau über ein erstes und ein zweites Lager (20; 21) verbindbar ist, wobei die beiden Lager (20; 21) vorzugsweise in einem am Aufbau montierbaren Hilfsrahmen angeordnet, als Gummilager ausgebildet, zueinander in Fahrzeugquerrichtung beabstandet und/oder zur Fahrzeuglängsachse symmetrisch angeordnet sind.

3. Radaufhängung nach einem oder mehreren der vorherigen Ansprüche,
**dadurch gekennzeichnet, dass** die nach Abschluss des Herstellungsprozesses ausgebildete Grundform der Querblattfeder (17) bereits zumindest teilweise die erste (22) und/oder zweite Krümmung (23) aufweist.

4. Radaufhängung nach einem oder mehreren der vorherigen Ansprüche,
**dadurch gekennzeichnet, dass** die Querblattfeder (17) zur Ausbildung der ersten (22) und/oder zweiten Krümmung (23), insbesondere flexibel, aus der Grundform in die Einbauform gebogen ist.

5. Radaufhängung nach einem oder mehreren der vorherigen Ansprüche,
**dadurch gekennzeichnet, dass** die beiden Lager (20; 21) bei Draufsicht zur Längsachse der Querblattfeder (17) und/oder bei Vorderansicht zur Querachse der Querblattfeder (17) orthogonal ausgerichtet sind.

6. Radaufhängung nach einem oder mehreren der vorherigen Ansprüche,
**dadurch gekennzeichnet, dass** die beiden Lager (20; 21) in der Draufsicht zur Ausbildung der ersten Krümmung (22) gegenüber der Fahrzeuglängsachse (L) und/oder in der Vorderansicht zur Ausbildung der zweiten Krümmung (23) gegenüber der Fahrzeughochachse (H) schräggestellt sind.

7. Radaufhängung nach einem oder mehreren der vorherigen Ansprüche,
**dadurch gekennzeichnet, dass** die beiden Lager (20; 21) und/oder die beiden Enden (18; 19) der Querblattfeder (17) in oder hinter der Radmitte angeordnet sind.

8. Radaufhängung nach einem oder mehreren der vorherigen Ansprüche,
**dadurch gekennzeichnet, dass** die Querblattfeder (17) im Bereich ihrer beiden Enden (18; 19) unmittelbar mit dem jeweiligen Radträger (2; 3) verbunden ist.

9. Radaufhängung nach einem oder mehreren der vorherigen Ansprüche,
**dadurch gekennzeichnet, dass** die Längslenker (9; 10) zur Ausbildung eines Schwertlenkers starr mit dem jeweiligen Radträger (2; 3) verbunden sind und/oder dass die Querblattfeder (17) und/oder der Längslenker (9; 10) in Fahrzeughochrichtung (H) in einer unteren Lenkerebene angeordnet sind.

10. Radaufhängung nach einem oder mehreren der vorherigen Ansprüche,
**dadurch gekennzeichnet, dass** die Radaufhängung (1) einen radseitig mit dem Radträger (2; 3) gelenkig verbundenen Querlenker (11; 12) aufweist, der vor der Radmitte angeordnet, mit der Querblattfeder (17) in derselben Lenkerebene angeordnet und/oder kürzer ausgebildet ist als der zwischen dem jeweiligen Lager (20; 21) und dem diesem zugeordneten Ende (18; 19) der Querblattfeder (17) ausgebildete Bereich der Querblattfeder (17).

11. Radaufhängung nach einem oder mehreren der vorherigen Ansprüche,
**dadurch gekennzeichnet, dass** die Radaufhängung einen zweiten Querlenker (14) aufweist, der oberhalb der Radmitte und/oder in einer oberen Lenkerebene angeordnet ist

12. Radaufhängung nach einem oder mehreren der vorherigen Ansprüche,
**dadurch gekennzeichnet, dass** der Querschnitt der Querblattfeder im Wesentlichen rechteckig ausgebildet ist und/oder einen annähernd kreisförmigen oder ellipsenartigen Querschnitt aufweist.

13. Radaufhängung nach Anspruch 14, **dadurch gekennzeichnet, dass** die Querblattfeder über ihre Länge eine von kreisförmig zu rechteckig variierende, insbesondere endseitig von kreisförmig zu ihrer Mitte rechteckig sich erstreckende Querschnittsform aufweist.

## Claims

1. Wheel suspension system (1) for a drivable rear axle of a motor vehicle having two wheel supports (2; 3) which are arranged so as to lie opposite one another in the vehicle transverse direction, and can be connected via in each case at least one wheel-steering link (9; 10) in an articulated manner to a structure which is provided for this purpose, the wheel suspension system (1) having a trailing arm (9; 10) which is assigned in each case to one of the two wheel supports (2; 3), and having a transverse leaf spring (17) which extends between the said two wheel supports (2; 3), which transverse leaf spring (17), for compression and rebound of the wheel supports (2; 3) from a zero position, can firstly be connected in the region between its two ends (18; 19), spaced apart from the latter, to the structure which is provided for this purpose, and is secondly connected, in the region of its two ends (18; 19), to the respectively associated wheel support (2; 3),
the transverse leaf spring (17) having, in its zero position, a first curvature in plan view and a second curvature (23) in front view which is configured in such a way that, in a front view, the transverse leaf spring (17), starting from its centre, is curved towards the roadway or away from the latter,
the first curvature (22) being configured in such a way that the transverse leaf spring (17), starting from its centre, is curved in or counter to the driving direction,
**characterized**
**in that** the first (22) and second curvature (23) extend over the entire length of the transverse leaf spring (17), and
**in that** the transverse leaf spring (17), in the region of its two ends (18; 19), is connected in an articulated manner to the respective wheel support (2; 3), and
is of wheel-steering configuration in order to set the camber and/or toe-in characteristic of the wheel suspension system.

2. Wheel suspension system according to the preceding claim, **characterized in that** the transverse leaf spring (17) can be connected via a first and a second bearing (20; 21) to the structure which is provided for this purpose, the two bearings (20; 21) preferably being arranged in a subframe which can be mounted on the structure, being configured as rubber bearings, being spaced apart from one another in the vehicle transverse direction and/or being arranged symmetrically with respect to the vehicle longitudinal axis.

3. Wheel suspension system according to one or both of the preceding claims, **characterized in that** the basic shape of the transverse leaf spring (17), which basic shape is configured after completion of the production process, already at least partially has the first (22) and/or second curvature (23).

4. Wheel suspension system according to one or more of the preceding claims, **characterized in that**, in order to configure the first (22) and/or second curvature (23), the transverse leaf spring (17) is bent, in particular in a flexible manner, out of the basic shape into the installed shape.

5. Wheel suspension system according to one or more of the preceding claims, **characterized in that** the two bearings (20; 21) are oriented orthogonally with respect to the longitudinal axis of the transverse leaf spring (17) in a plan view and/or orthogonally with respect to the transverse axis of the transverse leaf spring (17) in a front view.

6. Wheel suspension system according to one or more of the preceding claims, **characterized in that** the two bearings (20; 21) are positioned obliquely with respect to the vehicle longitudinal axis (L) in the plan view in order to configure the first curvature (22) and/or with respect to the vehicle vertical axis (H) in the front view in order to configure the second curvature (23).

7. Wheel suspension system according to one or more of the preceding claims, **characterized in that** the two bearings (20; 21) and/or the two ends (18; 19) of the transverse leaf spring (17) are arranged at or behind the wheel centre.

8. Wheel suspension system according to one or more of the preceding claims, **characterized in that**, in the region of its two ends (18; 19), the transverse leaf spring (17) is connected directly to the respective wheel support (2; 3).

9. Wheel suspension system according to one or more of the preceding claims, **characterized in that**, in order to configure a control blade, the trailing arms (9; 10) are connected rigidly to the respective wheel support (2; 3), and/or **in that** the transverse leaf spring (17) and/or the trailing arm (9; 10) are/is arranged in a lower link plane in the vehicle vertical direction (H).

10. Wheel suspension system according to one or more of the preceding claims, **characterized in that** the wheel suspension system (1) has a transverse link (11; 12) which is connected in an articulated manner on the wheel side to the wheel support (2; 3), is arranged in front of the wheel centre, is arranged in the same link plane with the transverse leaf spring (17) and/or is of shorter configuration than that region of the transverse leaf spring (17) which is configured between the respective bearing (20; 21) and that end (18; 19) of the transverse leaf spring (17) which is assigned to it.

11. Wheel suspension system according to one or more of the preceding claims, **characterized in that** the wheel suspension system has a second transverse link (14) which is arranged above the wheel centre and/or in an upper link plane.

12. Wheel suspension system according to one or more of the preceding claims, **characterized in that** the cross section of the transverse leaf spring is of substantially rectangular configuration and/or has an approximately circular or elliptical cross section.

13. Wheel suspension system according to Claim 14, **characterized in that**, over its length, the transverse leaf spring has a cross-sectional shape which varies from circular to rectangular, in particular extends from circular on the end side to rectangular in its centre.

## Revendications

1. Suspension de roues (1) pour un essieu arrière pouvant être entraîné d'un véhicule automobile avec deux supports de roue (2; 3) disposés en opposition dans la direction transversale du véhicule, qui peuvent être reliés de façon articulée à une structure prévue à cet effet respectivement au moyen d'au moins une bielle de guidage de roue (9; 10), dans laquelle la suspension de roue (1) présente un bras oscillant longitudinal (9; 10) respectivement associé à un des deux supports de roue (2; 3), et avec un ressort à lame transversal (17) s'étendant entre ces deux supports de roue (2; 3), qui pour l'enfoncement et la détente des supports de roue (2; 3) à partir d'une position neutre peut d'une part être relié dans la région située entre ses deux extrémités (18; 19) à distance de celles-ci à la structure prévue à cet effet et est d'autre part relié dans la région de ses deux extrémités (18; 19) au support de roue respectivement associé (2; 3),
dans laquelle le ressort à lame transversal (17) présente dans sa position neutre dans une vue en plan une première courbure et dans une vue de face une seconde courbure (23), qui est conçue de telle manière que le ressort à lame transversal (17) soit dans la vue de face courbé à partir de son milieu en direction de la chaussée ou en sens inverse,
dans laquelle la première courbure (22) est configurée de telle manière que le ressort à lame transversal (17) soit incurvé à partir de son milieu dans le sens de la marche ou en sens inverse,
**caractérisée en ce que** la première (22) et la seconde (23) courbures s'étendent sur toute la longueur du ressort à lame transversal (17), et
le ressort à lame transversal (17) est relié de façon articulée dans la région de ses deux extrémités (18; 19) au support de roue respectif (2; 3), et
est configuré pour régler le comportement de carrossage et/ou de parallélisme de la suspension de roues pour le guidage des roues.

2. Suspension de roues selon la revendication précédente, **caractérisée en ce que** le ressort à lame transversal (17) peut être relié à la structure prévue à cet effet au moyen d'un premier et d'un second paliers (20; 21), dans laquelle les deux paliers (20; 21) sont disposés dans un cadre auxiliaire à monter sur la structure, sont réalisés sous forme de paliers en caoutchouc, sont espacés l'un de l'autre dans la direction transversale du véhicule et/ou sont disposés de façon symétrique par rapport à l'axe longitudinal du véhicule.

3. Suspension de roues selon une ou plusieurs des revendications précédentes, **caractérisée en ce que** la forme de base du ressort à lame transversal (17) obtenue après la fin du processus de fabrication présente déjà au moins partiellement la première (22) et/ou la seconde (23) courbures.

4. Suspension de roues selon une ou plusieurs des revendications précédentes, **caractérisée en ce que** le ressort à lame transversal (17) est cintré pour la formation de la première (22) et/ou de la seconde (23) courbures, en particulier de façon flexible, de la forme de base à la forme de montage.

5. Suspension de roues selon une ou plusieurs des revendications précédentes, **caractérisée en ce que** les deux paliers (20; 21) sont orientés orthogonalement à l'axe longitudinal du ressort à lame transversal (17) dans la vue en plan et/ou à l'axe transversal du ressort à lame transversal (17) dans la vue de face.

6. Suspension de roues selon une ou plusieurs des revendications précédentes, **caractérisée en ce que** les deux paliers (20; 21) sont posés en oblique par rapport à l'axe longitudinal (L) du véhicule dans la vue en plan pour former la première courbure (22) et/ou par rapport à l'axe vertical (H) du véhicule dans la vue de face pour former la seconde courbure (23).

7. Suspension de roues selon une ou plusieurs des revendications précédentes, **caractérisée en ce que** les deux paliers (20; 21) et/ou les deux extrémités (18; 19) du ressort à lame transversal (17) sont disposé(e)s au milieu des roues ou derrière celui-ci.

8. Suspension de roues selon une ou plusieurs des revendications précédentes, **caractérisée en ce que** le ressort à lame transversal (17) est relié dans la région de ses deux extrémités (18; 19) directement au support de roue respectif (2; 3).

9. Suspension de roues selon une ou plusieurs des revendications précédentes, **caractérisée en ce que** les bras oscillants longitudinaux (9; 10) sont reliés de façon rigide au support de roue respectif (2; 3) pour la formation d'un bras à lame et/ou **en ce que** le ressort à lame transversal (17) et/ou le bras oscillant longitudinal (9; 10) sont disposés dans un plan de bras inférieur dans la direction verticale (H) du véhicule.

10. Suspension de roues selon une ou plusieurs des revendications précédentes, **caractérisée en ce que** la suspension de roues (1) présente un bras oscillant transversal (11; 12) relié de façon articulée côté roue au support de roue (2; 3), qui est disposé devant le milieu de roue, qui est disposé avec le ressort à lame transversal (17) dans le même plan de bras et/ou qui est plus court que la région du ressort à lame transversal (17) formée entre le palier respectif (20; 21) et l'extrémité (18; 19) du ressort à lame transversal (17) associée à celui-ci.

11. Suspension de roues selon une ou plusieurs des revendications précédentes, **caractérisée en ce que** la suspension de roues présente un second bras oscillant transversal (14), qui est disposé au-dessus du milieu de roue et/ou dans un plan de bras supérieur.

12. Suspension de roues selon une ou plusieurs des revendications précédentes, **caractérisée en ce que** la section transversale du ressort à lame transversal est de forme essentiellement rectangulaire et/ou présente une section transversale approximativement circulaire ou elliptique.

13. Suspension de roues selon la revendication 14, **caractérisée en ce que** le ressort à lame transversal présente sur sa longueur une forme de section transversale variant de circulaire à rectangulaire, en particulier passant de circulaire aux extrémités à rectangulaire en son milieu.
